Europäisches Patentamt

**European Patent Office**

Office européen des brevets

(19)

(11) Veröffentlichungsnummer: **0 207 211**
**B1**

(12) # EUROPÄISCHE PATENTSCHRIFT

(45) Veröffentlichungstag der Patentschrift:
**10.01.90**

(51) Int. Cl.⁴: **A 61 C 8/00**

(21) Anmeldenummer: **85890149.9**

(22) Anmeldetag: **03.07.85**

(54) **Implantables Befestigungsmittel für Zahnprothesen.**

(43) Veröffentlichungstag der Anmeldung:
**07.01.87 Patentblatt 87/2**

(45) Bekanntmachung des Hinweises auf die Patenterteilung:
**10.01.90 Patentblatt 90/2**

(84) Benannte Vertragsstaaten:
**AT BE CH DE FR GB IT LI LU NL SE**

(56) Entgegenhaltungen:
**DE-A- 3 326 710**
**GB-A- 2 063 680**
**US-A- 2 449 522**
**US-A- 3 708 883**

(73) Patentinhaber: **Bauer, Johann, Siccardsburggasse 8/1,**
**A-1100 Wien (AT)**
Patentinhaber: **Roland, Manfred Dr., Am Platz 4,**
**A-1130 Wien (AT)**

(72) Erfinder: **Bauer, Johann, Siccardsburggasse 8/1,**
**A-1100 Wien (AT)**
Erfinder: **Roland, Manfred Dr., Am Platz 4, A-1130 Wien**
**(AT)**

(74) Vertreter: **Haffner, Thomas M., Dr. et al,**
**Patentanwaltskanzlei Dipl.-Ing. Adolf Kretschmer Dr.**
**Thomas M. Haffner Schottengasse 3a, A-1014 Wien (AT)**

## Beschreibung

Die Erfindung bezieht sich auf ein implantables Befestigungsmittel für Zahnprothesen, mit einem zur Einheilung im Knochengewebe bestimmten sich konisch verjüngenden Befestigungszapfen, dessen in den Kiefer einbringbares apikales Ende ein Außengewinde trägt.

Ein derartiges einschraubbares Implantat ist beispielsweise der DE-OS 2 018 330 zu entnehmen. Ein solches Implantat ist kompakt und kann deshalb von der Knochensubstanz nicht durchwachsen werden, womit die Verankerung des Implantats nicht über einen ausreichend langen Zeitraum gewährleistet ist. Die im konischen Teil des Implantats gemäß der DE-OS 2 018 330 vorgesehenen Längsnuten sollen lediglich das Einschneiden des Implantats in den Kieferknochen erleichtern, tragen jedoch nichts zu einer Verbesserung der Verankerung des Implantats bei. Bei der Ausführungsform gemäß AT-PS 328 067 ist eine mehrteilige Befestigungseinheit vorgesehen, deren unterer Teil vollständig in das Kieferbein einschraubbar ist, wodurch das Einheilen des Implantats begünstigt werden soll. Eine weitere Ausbildung eines Dentalimplantats ist der AT-PS 349 130 zu entnehmen, bei welcher das apikale Ende abgestuft ausgebildet wurde, wobei die Mantelfläche eine gerillte bzw. profilierte Oberfläche aufweisen. Diese die einzelnen Stufen verbindenden Flächen sollten auf diese Weise weniger mit dem umgebenden Knochengewebe verwachsen, wodurch eine geringfügige Beweglichkeit des eingepflanzten Dentalimplantats sichergestellt sein sollte. Allen diesen Ausführungsformen von Dentalimplantaten ist gemeinsam, daß sie vom umgebenden Knochengewebe nicht durchwachsen werden können und damit eine dauerhafte Verankerung nicht gewährleistet ist.

Die vorliegende Erfindung zielt nun darauf ab, das Einsetzen eines derartigen Dentalimplantats zu erleichtern und das Ausheilen bei gleichzeitiger Sicherstellung der erforderlichen Elastizität zu verbessern.

Zur Lösung dieser Aufgabe besteht die Erfindung im wesentlichen darin, daß der Befestigungszapfen rohrförmig ausgebildet ist und daß das apikale Ende des Befestigungszapfens im Bereich des Außengewindes längsverlaufende, insbesondere in Richtung der erzeugenden verlaufende Schlitze aufweist. Dadurch, daß das apikale Ende, welches das Außengewinde trägt, längsverlaufende, insbesondere in Richtung der Erzeugenden verlaufende Schlitze aufweist, wird beim Einschrauben des Implantats ein exakt entsprechendes Gewinde geschnitten, wobei die verbleibenden Schlitze zwischen den einzelnen Segmenten des apikalen Endes in der Folge vom Kiefergewebe durchwachsen werden können und die Verankerung verbessern. Die Ausbildung des Befestigungszapfens mit Längsschlitzen stellt darüberhinaus eine gewisse Elastizität des Implantates sicher, so daß die Gefahr einer Lockerung nach dem Verheilen verringert wird. Dadurch, daß der Befestigungszapfen rohrförmig ausgebildet ist, läßt sich über den axial durchgehenden Hohlraum und über die in Richtung der Erzeugenden des Zapfens verlaufende Schlitze in der Folge nach dem Einschrauben ein körperverträgliches Füllungsmaterial einpressen, welches durch den Rohrschaft in das Wurzelbett gelangt. Durch dieses Füllungsmittel läßt sich die Heilung beschleunigen und es können Unregelmäßigkeiten in der für die Aufnahme des Implantats vorgesehenen Bohrung ausgeglichen werden.

Die Ausbildung des Befestigungsmittels ist erfindungsgemäß vorzugsweise so getroffen, daß der konische apikale Teil des befestigungszapfens in einen im wesentlichen zylindrischen Teil übergeht, dessen Mantel ringförmige Erhebungen und/oder Vertiefungen aufweist. An diesen im wesentlichen zylindrischen Teil läßt sich in der Folge die Kronenhülse bzw. Krone einfach festlegen, wobei beispielsweise eine Kronenhülse Verwendung finden kann, welche nach dem Aufschieben auf den zylindrischen Teil mit einem aushärtenden Füllmittel aufgefüllt wird. In einfacher Weise kann als Füllmittel für die Kronenhülse das gleiche Füllmittel verwendet werden, welches auch durch den hohlen Schaft des rohrförmig ausgebildeten Befestigungszapfens eingebracht wurde und es kann vorzugsweise die Kronenhülse zu einem Zeitpunkt bereits mit dem Füllmittel fertiggestellt werden, zu welchem die Aushärtung des Füllmittels innerhalb des rohrförmigen Schaftes noch nicht beendet ist.

Vorzugsweise ist die Ausbildung so getroffen, daß wenigstens drei, vorzugsweise 6 bis 10 achsparallele Schlitze äquidistant zueinander angeordnet sind, welche sich über wenigstens zwei Drittel der axialen Länge des Gewindes des konischen apikalen Endes erstrecken. Auf diese weise wird ein gutes Einheilen des Implantates sichergestellt, und eine hinreichende Elastizität des Implantats gewährleistet. Die Tiefe der Gewindegänge kann hiebei ausgehend vom apikalen Ende des Befestigungszapfens von Gewindegang zu Gewindegang zunehmen. In bevorzugter Weise beträgt die Breite der Schlitze in Umfangsrichtung gemessen an der verschieden großen Innenweite des Rohrschaftes bis 0,8 mm, vorzugsweise etwa 0,2 mm.

In besonders vorteilhafter Weise läßt sich ein derartiger Befestigungszapfen dadurch weiterbilden, daß der Hohlraum des rohrförmigen Befestigungszapfens von einem im wesentlichen zylindrischen Mantel begrenzt ist, dessen Innenseite ein Gewinde für die Aufnahme eines einschraubbaren Dornes oder Bolzens trägt. Eine derartige Ausbildung hat den Vorteil, daß dadurch in den Befestigungszapfen weitere die Verankerung korrigierende Teile eingeschraubt werden können, und es besteht gleichzeitig die Möglichkeit, in diesen Hohlraum die Suprastruktur für die Befestigung von Zähnen einzuschrauben.

Um auch nach dem Einbau des Befestigungszapfens noch die Möglichkeit zu haben die Verankerungswirkung nachzustellen, insbesondere, wenn nach längerem Gebrauch eine Lockerung des befestigungszapfens trotz der Verwachsungen durch die Schlitze auftritt, ist in besonders vorteilhafter Weise die Ausbildung so getroffen, daß der im wesentlichen zylindrische Mantel des Hohlraumes sich im Bereich der Schlitze konisch zum Ende des Befestigungszapfens verjüngt. Hier genügt eine überaus geringe Konizität, um bei einem Einschrauben eines Bolzens eine Nachstellwirkung für die Verankerung zu erzielen. Wenn beispielsweise nach mehrjährigem Gebrauch der Befestigungszapfen Lockerungstendenzen zeigt, genügt es die Suprastruktur abzunehmen und den im Inneren des Hohlraumes des Befestigungszapfens angeordneten Schraubbolzen ein geringes Maß tiefer einzuschrauben, wodurch eine Spreizwirkung auf die sich konisch verjüngenden apikalen Endbereiche des Befestigungszapfens ausgeübt wird. Auf Grund der in axialer Richtung verlaufenden Schlitze ist in diesem Falle eine neuerliche feste Verankerung ohne neuerliche operative Maßnahmen möglich, worauf in der Folge die Suprastruktur wiederum aufgesetzt bzw. aufgeschraubt wird.

In besonders vorteilhafter Weise ist hierbei der einschraubbare Bolzen in axialer Richtung kürzer bemessen als die axiale länge des Hohlraumes, und in den apikalen Teil des Befestigungszapfens unter Aufweitung des apikalen Teiles einschraubbar. Bei der erstmaligen Anwendung soll hiebei der Befestigungszapfen nicht in seine Endlage einschraubt werden, sondern es soll zunächst der Versuch unternommen werden, eine sichere Verankerung ohne vollständige Aufspreizung des apikalen Endes zu erzielen. Auf diese Weise wird eine gewisse Reserve zum Nachstellen geschaffen, und dadurch, daß der einschraubbare Bolzen kürzer bemessen ist als die axiale Länge des Hohlraumes, verbleibt oberhalb des einschraubbaren Bolzens eine hinreichende Einschraublänge für das Festlegen der Suprastruktur im Schraubgewinde des Hohlraumes.

In besonders einfacher Weise kann die konische Verjüngung der Mantelfläche des Hohlraumes im Bereich der axialen Schlitze durch Verformung des geschlitzten apikalen Teiles eines im wesentlichen zylindrischen Befestigungszapfens hergestellt werden, wobei bei dieser Ausbildung sich zum apikalen Ende verjüngende Schlitze ausgebildet werden. Diese sich verjüngenden Schlitze werden nach dem erstmaligen Einsatz vom Gewebe durchwachsen und bei einem in der Folge zu einem späteren Zeitpunkt vorgenommenen Nachstellvorgang ergibt sich eine geringfügige Aufweitung dieser Schlitze, wodurch neuer Raum für zusätzliche Verwachsungen geschaffen wird. In den Fällen, in welchen die Schlitze bereits vor der Verformung des apikalen Bereiches des Befestigungszapfens hergestellt wurden, ist die Ausbildung mit Vorteil so getroffen, daß die Schlitze vor der Verformung des apikalen Endes des Befestigungszapfens in Umfangsrichtung eine Breite von 0,5 bis 2 mm aufweisen. Auf diese Weise bleibt auch nach einem Verformen zur Ausbildung der Verjüngung des Hohlraumes eine hinreichende Schlitzbreite, um die scharfkantige Ausbildung sicherzustellen, wie sie für das Einschrauben bevorzugt ist.

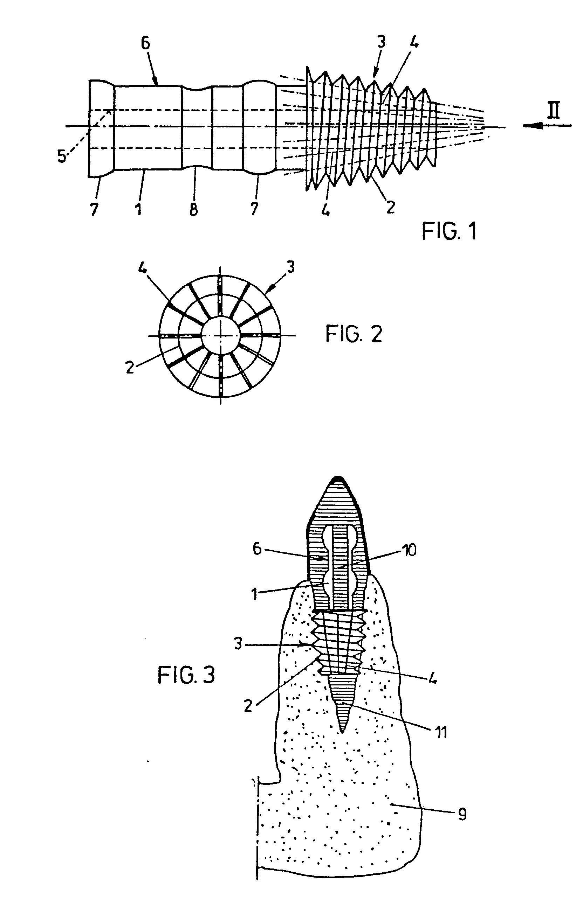

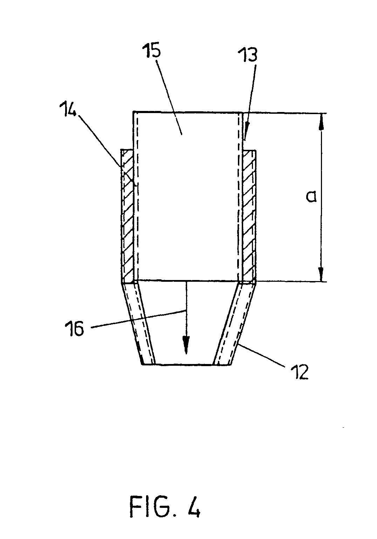

Die Erfindung wird nachfolgend an Hand von in der Zeichnung dargestellten Ausführungsbeispielen näher erläutert. In dieser zeigen: Fig. 1 eine Seitenansicht des erfindungsgemäßen Befestigungsmittels, teilweise im Schnitt, Fig. 2 eine Ansicht in Richtung des Pfeiles II der Fig. 1, Fig. 3 die Anordnung des Befestigungsmittels zusammen mit einer Krone in einem Unterkiefer und Fig. 4 eine abgewandelte Ausbildung im Axialschnitt.

In Fig. 1 ist ein rohrförmiger Zapfen 1 dargestellt, dessen apikales Ende ein Außengewinde 2 aufweist, welches konisch geschnitten ist. Im Bereich dieses Außengewindes 2 sind parallel zu den Erzeugenden des konischen Teiles 3 verlaufende Schlitze 4 vorgesehen, welche eine Zusammenpreßbarkeit des apikalen Endes ergeben. Diese Schlitze 4 haben eine Breite von etwa 0,2 mm, wie dies in Fig. 2 übertrieben dargestellt ist. Der zentrale Hohlraum 5 des rohrförmigen Befestigungszapfens erstreckt sich axial über die gesamte Länge des Befestigungszapfens 1. Der konische Teil 3 geht hierbei in einen im wesentlichen zylindrischen Bereich 6 über, dessen Mantelfläche ringförmige Erhebungen 7 und ringförmige Vertiefungen 8 für die Verbesserung der Verankerung der Krone aufweist.

Bei der Darstellung nach Fig. 3 ist mit 9 der Kiefer bezeichnet. In eine vorgefertigte Öffnung dieses Kiefers, welche nach Extraktion eines Zahnes als Alveole besteht oder beispielsweise durch Bohren oder Stemmen hergestellt werden kann, wird das apikale Ende 3 des Befestigungszapfens 1 eingetrieben, wobei die im wesentlichen axial verlaufenden Schlitze wiederum mit 4 bezeichnet sind. Die Gewindegänge des Gewindes 2 schneiden hiebei in den Unterkiefer ein entsprechend exakt angepaßtes Gegengewinde unter geringster Verletzung des Knochengewebes und der im wesentlichen zylindrisch ausgebildete Teilbereich 6 des Befestigungszapfens kann über das Knochengewebe hinausragen. Nach dem Einschrauben des Gewindes 2 wird eine körperverträgliche Füllmasse 10 eingebracht und es wird auf den im wesentlichen zylindrisch ausgebildeten Teil des Befestigungszapfens 1 die Kronenhülse aufgeschoben. Die Kronenhülse kann hiebei vor dem Aushärten der Füllmasse 10 im Inneren des rohrförmigen Befestigungsmittels mit einer identischen Füllmasse ausgefüllt werden, so daß ein gemeinsames Aushärten der Füllmassen erzielt wird. Die Füllmasse wird über den Hohlraum 5 hindurch bis in die untersten Stellen der Wurzelhöhlung in den mit 11 bezeichneten Bereich eingebracht, und es ergibt sich auf diese Weise eine größe Ankerstrecke für die Festlegung des Zahnersatzes.

Der rohrförmigen Befestigungszapfen kann hiebei aus Metall oder entsprechenden körperverträglichen Werkstoffen, insbesondere Tantal, ausgebildet sein.

In Fig. 4 ist eine abgewandelte Ausbildung eines Befestigungszapfens zu ersehen, bei welcher das apikale Ende 12 wiederum in analoger Weise, wie bei den Ausbildungen nach den Fig. 1 bis 3, in axialer Richtung orientierte Schlitze aufweist und an seiner Außenseite ein Außengewinde trägt. Zusätzlich weist dieser Befestigungszapfen 13 an seiner Innenseite einen im wesentlichen zylindrischen Hohlraum auf, welcher ein Innengewinde 14 trägt. Dieser im wesentlichen zylindrische Hohlraum verjüngt sich im Bereich des apikalen Endes und es ist ein Bolzen 15 zum Einschrauben in den Hohlraum bestimmt. Solange der Bolzen 15 nicht in das apikale Ende 12 eintaucht, erfolgt hiebei keine Spreizwirkung. Die axiale Länge a ist in Fig. 4 übertrieben dargestellt und kann ohne weiteres wesentlich geringer sein. Mit Vorteil läßt sich der Bolzen 15 bereits ohne Spreizwirkung des apikalen Teiles 12 so weit in den Hohlraum des Verankerungszapfens 13 einschrauben, daß ein Teil des Innengewindes 14 am oberen Ende für die Festlegung einer Suprastruktur zur Verfügung steht. Die Suprastruktur kann aber auch ohne weiteres am Bolzengewinde des Bolzens 15 festgelegt werden.

Wenn in der Folge eine Lockerung des Befestigungszapfen 13 aufgetreten ist, genügt es die Suprastruktur abzunehmen und den Bolzen 15 weiter einzuschrauben. Bei diesem weiteren Eintreiben in Richtung des Pfeiles 16 gelangt der Bolzen in den Bereich der Verjüngung des Innengewindes 14 des Hohlraumes des Befestigungszapfens 13, wobei eine Aufweitung des apikales Endbereiches 12 erfolgt. Diese Nachspannung bewirkt eine neuerliche Festlegung ohne zusätzliche operative Maßnahmen. Nach der Verstellung des Bolzens 15 kann die Suprastruktur mit dem Zahnersatz in üblicher Weise wiederum festgelegt werden.

In besonders vorteilhafter Weise läßt sich der Einheilungsprozeß dadurch beschleunigen, daß nach dem Einsetzen des Befestigungszapfens zunächst ein Deckel aus körperverträglichem Material auf dem dem apikalen Ende gegenüberliegenden Ende des Befestigungszapfens festgelegt, beispielsweise eingeschraubt wird. Nach der Einheilung genügt es, den Deckel mit geringen Schnitten zu öffnen, worauf die Suprastruktur festgelegt werden kann. Der rohrförmige Befestigungszapfen mit Innengewinde bietet hierfür die besten Voraussetzungen für die Festlegung eines Deckels mit abgerundeten Kanten, welcher nach Art eines Schraubenkopfes der Befestigungszapfen übergreifen kann.

## Patentansprüche

1. Implantables Befestigungsmittel für Zahnprothesen, mit einem zur Einheilung im Knochengewebe bestimmten sich nach apikal konisch verjüngenden Befestigungszapfen (1), dessen in den Kiefer einbringbares apikales Ende (3) ein Außengewinde (2) trägt, dadurch gekennzeichnet, daß der Befestigungszapfen (1) rohrförmig ausgebildet ist und daß das apikale Ende (3) des Befestigungszapfens im Bereich des Außengewindes (2) längsverlaufende, insbesondere in Richtung der Erzeugenden des konischen, apikalen Endes (3) verlaufende Schlitze (4) aufweist.

2. Implantables Befestigungsmittel nach Anspruch 1, dadurch gekennzeichnet, daß der konische apikale teil (3) des Befestigungszapfens (1) in einen zylindrischen Teil (6) übergeht, dessen Mantel ringförmige Erhebungen (7) und/oder Vertiefungen (8) aufweist.

3. Implantables Befestigungsmittel nach Anspruch 1 oder 2, dadurch gekennzeichnet, daß wenigstens drei, vorzugsweise 6 bis 10 achsparallele Schlitze (4) äquidistant zueinander angeordnet sind, welche sich über wenigstens zwei Drittel der axialen Länge des Gewindes (2) des konischen apikalen Endes (3) erstrecken.

4. Implantables Befestigungsmittel nach einem der Ansprüche 1 bis 3, dadurch gekennzeichnet, daß die Tiefe der Gewindegänge ausgehend vom apikalen Ende des Befestigungszapfens (1) von Gewindegang zu Gewindegang zunimmt.

5. Implantables Befestigungsmittel nach einem der Anprüche 1 bis 4, dadurch gekennzeichnet, daß die Breite der Schlitze (4) in Umfangsrichtung gemessen bis 0,8 mm, vorzugsweise 0,2 mm, beträgt.

6. Implantables Befestigungsmittel nach einem der Ansprüche 1 bis 5, dadurch gekennzeichnet, daß der Hohlraum des rohrförmigen Befestigungszapfens von einem im wesentlichen zylindrischen Mantel begrenzt ist, dessen Innenseite ein Gewinde für die Aufnahme eines einschraubbaren Dornes oder Bolzens trägt.

7. Implantables Befestigungsmittel nach Anspruch 6, dadurch gekennzeichnet, daß der im wesentlichen zylindrische Mantel des Hohlraums sich im Bereich der Schlitze konisch zum apikalen Ende des Befestigungszapfens verjüngt.

8. Implantables Befestigungsmittel nach einem der Ansprüche 1 bis 7, dadurch gekennzeichnet, daß der einschraubbare Bolzen in axialen Richtung kürzer bemessen ist als die axiale Länge des Hohlraumes und in den apikalen Teil des Befestigungszapfens unter Aufweitung des apikalen Teiles einschraubbar ist.

9. Implantables Befestigungsmittel nach einem der Ansprüche 1 bis 8, dadurch gekennzeichnet, daß die konische Verjüngung des Hohlraumes im Bereich der axialen Schlitze durch Verformung des geschlitzten apikalen Teiles hergestellt ist, wobei die Schlitze sich gleichfalls zum apikalen Ende verjüngen.

10. Implantables Befestigungsmittel nach Anspruch 9, dadurch gekennzeichnet, daß die Schlitze vor der Verformung des apikalen Endes des Befestigungszapfens in Umfangsrichtung eine Breite von 0,5 bis 2 mm aufweisen.

## Claims

1. Implantable securing means for dental prostheses, having a securing peg (1) intended for permanent implantation in the bone tissue, which peg tapers conically towards an apex and of which peg the apical end (3) that is insertable in the jaw has an external thread (2), characterised in that the securing peg (1) is of tubular construction and the apical end (3) of the securing peg has in the region of the external thread (2) slots (4) extending in the longitudinal direction, especially in the direction of the generatrix of the conical apical end (3).

2. Implantable securing means according to claim 1, characterised in that the conical apical portion (3) of the securing peg (1) passes into a cylindrical portion (6) the wall of which has annular protuberances (7) and/or depressions (8).

3. Implantable securing means according to claim 1 or 2, characterised in that at least three, preferably from 6 to 10, slots (4) are arranged parallel to the axis and at equal distances from one another, which slots extend over at least two thirds of the axial length of the thread (2) of the conical apical end (3).

4. Implantable securing means according to any one of claims 1 to 3, characterised in that the depth of the threads increases from turn to turn starting from the apical end of the securing peg (1).

5. Implantable securing means according to any one of claims 1 to 4, characterised in that the width of the slots (4), measured in the circumferential direction, is up to 0.8 mm, preferably 0.2 mm.

6. Implantable securing means according to any one of claims 1 to 5, characterised in that the cavity of the tubular securing peg is defined by a substantially cylindrical wall the inner side of which has a thread for receiving a screwable spindle or pin.

7. Implantable securing means according to claim 6, characterised in that the substantially cylindrical wall around the cavity tapers in the region of the slots conically towards the apical end of the securing peg.

8. Implantable securing means according to any one of claims 1 to 7, characterised in that the screwable pin is shorter in the axial direction than the axial length of the cavity and can be screwed into the apical portion of the securing peg, causing expansion of the apical portion.

9. Implantable securing means according to any one of claims 1 to 8, characterised in that the conical tapering of the cavity in the region of the axial slots is produced by deformation of the slotted apical portion, the slots likewise tapering towards the apical end.

10. Implantable securing means according to claim 9, characterised in that prior to the deformation of the apical end of the securing peg the slots have a width of from 0.5 to 2 mm in the circumferential direction.

**Revendications**

1. Moyen de fixation pour implant, destiné à des prothèses dentaires, comportant un tenon de fixation (1) à insérer dans le tissu osseux, se rétrécissant coniquement vers l'apex, dont la partie apicale (3), à introduire dans la mâchoire, porte un filetage extérieur (2), caractérisé en ce que le tenon de fixation (1) est de structure tubulaire et en ce que l'extrémité apicale (3) du tenon de fixation présente, dans la zone du filetage extérieur (2), des fentes de tracé longitudinal, en particulier dans la direction de l'extrémité apicale conique (3).

2. Moyen de fixation pour implant selon la revendication 1, caractérisé en ce que la partie apicale conique (3) du tenon de fixation (1) se raccorde à une partie cylindrique (6), dont l'enveloppe présente des élévations (7) et/ou des cavités (8) annulaires.

3. Moyen de fixation pour implant selon la revendication 1 ou 2, caractérisé en ce qu'il comporte au moins trois, de préférence 6 à 10 fentes parallèles à l'axe, équidistantes entre elles, s'étendent sur au moins les deux tiers de la longueur axiale du filetage (2) de l'extrémité apicale conique (3).

4. Moyen de fixation pour implant selon l'une des revendications 1 à 3, caractérisé en ce que la profondeur de filet augmente d'une spire à la suivante en partant de l'extrémité apicale du tenon de fixation (1).

5. Moyen de fixation pour implant selon l'une des revendications 1 à 4, caractérisé en ce que la largeur des fentes (4), mesurée dans la direction de la périphérie, peut atteindre 0,8 mm, et de préférence est de 0,2 mm.

6. Moyen de fixation pour implant selon l'une des revendications 1 à 5, caractérisé en ce que l'espace creux de tenon de fixation annulaire est limité par une enveloppe sensiblement cylindrique, dont le côté intérieur porté un filetage pour recevoir une broche ou un boulon qui peut être vissé.

7. Moyen de fixation pour implant selon la revendication 6, caractérisé en ce que l'enveloppe sensiblement cylindrique de l'espace creux se rétrécit coniquement dans la zone des fentes vers l'extrémité apicale di tenon de fixation.

8. Moyen de fixation pour implant selon l'une des revendications 1 à 7, caractérisé en ce que le boulon qui peut être vissé, mesuré en direction radiale, est plus court que la longueur de l'espace creux et peut être vissé dans la partie apicale du tenon de fixation en élargissant la partie apicale.

9. Moyen de fixation pour implant selon l'une des revendications 1 à 8, caractérisé en ce que le rétrécissement conique de l'espace creux dans la zone des fentes axiales est réalisé par formage de la partie axiale fendue, les fentes se rétrécissant également vers l'extrémité apicale.

10. Moyen de fixation pour implant selon la revendication 9, caractérisé en ce que les fentes présentent, avant le formage de l'extrémité apicale du tenon de fixation, une largeur de 0,5 à 2 mm dans la direction périphérique.

FIG. 1

FIG. 2

FIG. 3

FIG. 4